# EUROPEAN PATENT APPLICATION

(11) **EP 3 973 791 A1**
(43) Date of publication of application: **30.03.2022**
(21) Application number: 21169025.0
(22) Date of filing: 16.04.2021
(51) Int. Cl.: A23L 11/45, A23L 5/10, A23P 20/00

(54) **METHOD FOR MODIFYING THE PROPERTIES OF TOFU USING BASIC SUBSTANCE AND TOFU PREPARED THEREBY**

(30) Priority: 28.09.2020 KR 20200125726
(71) Applicant: Taejin Gns Co., Ltd., Incheon 21698 (KR)
(72) Inventor: KIM, Byoung-soub, 21968 Incheon (KR); KIM, Young-woong, 22001 Incheon (KR); LEE, Yun-ho, 22022 Incheon (KR); LEE, Gi-young, 21697 Incheon (KR); KIM, Taeck-hyun, 22022 Incheon (KR); YUN, Hye-jung, 21670 Incheon (KR); JANG, Eun-bin, 21679 Incheon (KR); KIM, Tak-hyeon, 21445 Incheon (KR)
(74) Representative: Cabinet Laurent & Charras

(57) **Abstract**

According to an embodiment, a method for manufacturing tofu comprises preparing a basic softening solution, soaking a tofu in the basic softening solution, applying a frying powder to a surface of the soaked tofu, and frying the frying powder-applied in oil.

## Description

### CROSS-REFERENCE TO RELATED APPLICATION(S)

This application claims priority to Korean Patent Application No. 10-2020-0125726 filed in the Korean Intellectual Property Office on September 28, 2020, the disclosure of which is incorporated by reference herein in its entirety.

### TECHNICAL FIELD

Embodiments of the disclosure relate to a method for modifying or enhancing the physical properties of tofu using a basic substance and tofu produced by the method.

### DISCUSSION OF RELATED ART

Soybeans (beans) consist of approximately 40% protein, 30-35% carbohydrates, 20% fat, and 12-23% lipids and other traces of phytic acid, saponin, and various phenolic compounds (typically isoflavones). Soybean protein is known to be the best among plant proteins in terms of quantity and quality. Soybean protein consists of 10% of albumin and 90% of globulin, which are simple proteins. Albumin is water-soluble, but globulin is not well dissolved in water but is dissolved in a neutral salt solution, dilute acid or dilute basic solution. Albumin is mainly an enzyme protein (trypsin inhibitor, hemagglutinin, lipoxygenase), and according to the FDA, consuming 25g of soybean protein per day can help prevent circulatory disease. Globulins are classified into glycinin (11S) and conglycinin (7S) according to their molecular weight.

Glycinin, the main protein of soybeans, is well soluble in neutral salt solutions, such as of salt, and fibrin softening occurs easily. Soaking in 0.5 to 1% of salt water and heating promotes the softening of soybeans.

In a basic environment, the hemicellulose and pectin of soybeans are softened to promote absorption and swelling. Therefore, soybeans will have increased absorbency and be further softened by adding 0.3% sodium hydrogen carbonate or 0.2% potassium carbonate.

On the other hand, in an acidic environment of pH 4-5, most proteins become insoluble.

That is, it does not soften but solidifies.

Soybeans are also affected by the temperature of the soaking water. The higher the temperature, the faster the absorption rate and the faster the softening. However, it is difficult to soften the soybeans if they are soaked in water at temperatures of 60°C to 80°C. This is because if heat is applied to soybean protein, the soybean protein absorbs the thermal energy and thus its structure is changed. This process happens to conglycinin (7S) at 60°C to 73°C and glycinin (11S) at 80°C to 95°C.

Although soy protein score (73) is lower than that of meat protein (78-83) and digestibility is lower than that of animal proteins such as eggs, milk, or milk casein, material processing such as heat treatment and removal of non-proteinaceous nitrogen compounds (fat, fiber, ash, carbohydrates, etc.) may increase the content of pure protein, resulting in a digestibility similar to that of meat protein.

According to the U.S. Food and Drug Administration (FDA), the protein digestibility corrected amino acid score (PDCAAS) for the qualitative evaluation of a protein is measured as 0.92 for meat protein, 1.00 for egg and milk protein, and 0.99 for soybean protein.

This is an excellent result similar to that of milk protein.

Tofu is food from which soy protein may be efficiently obtained. During the manufacturing process, water-insoluble carbohydrates and fiber are removed in a pulp form, and then protein is coagulated.

Tofu has been consumed in various types since a very long time ago.

The types of tofu are very diverse, from commonly encountered firm tofu (cotton tofu) to extra soft tofu(sun-dubu), silken tofu (kinugoshi), frozen tofu, and dried tofu. Globally, tofu-related and soy protein products maintain a very large industry.

Although there are differences depending on the types of tofu, the general manufacturing method is to coagulate soybeans by adding a coagulant to the soybean milk after soaking, grinding, heating, and soybean pulp filtering.

In theory, when soybeans absorb water, the protein and fat of the soybeans are mixed with the absorbed water into a colloidal solution, and when this is ground, the colloidal solution comes out of the soybean structure.

There are two ways to perform coagulation so that the colloid solution is hardened into a tofu shape. The first is a method using an acid solution of about pH 4-6 (commercially mainly using gluconodeltalactone), and the second is a method using a coagulant containing magnesium ions (in most cases magnesium chloride or crude magnesium chloride) or calcium ions (e.g., contained in calcium sulfate).

This process uses the property of soybean protein globulin (glycinin, conglycinin), which is precipitated by the isoelectric point or divalent cations.

Conventionally, various techniques for changing the texture of tofu are known.

Most of them are techniques to change the texture of the tofu by controlling the curd formation of the tofu during the coagulation process or by mixing tofu or soy milk with other additives (milk, cheese, etc.).

Some of these techniques may be difficult to apply to tofu production or may fail to improve the texture of tofu.

There are techniques for making the prepared tofu have a soft texture by soaking or applying the prepared tofu in a basic solution such as sodium hydrogen carbonate, but such techniques do not make a significant change to the final form as compared with before it is treated with the basic solution.

### SUMMARY

According to an embodiment, there is provided a method for modifying the physical properties of tofu that has already been solidified by using a basic substance.

According to an embodiment, there are provided a method for manufacturing tofu that is savory and has a texture of sticky starch paste or custard cream as compared with conventional tofu and tofu manufactured by the method.

According to an embodiment, there is provided tofu that may be frozen stored and distributed and is suitable for home meal replacements.

According to an embodiment, it is possible to lead to customers, who are unwilling to eat tofu, consuming vegetable protein more easily and comfortably and to expand and diversify tofu industry.

According to an embodiment, a method for manufacturing tofu comprises preparing a basic softening solution, soaking a tofu in the basic softening solution, applying a frying powder to a surface of the soaked tofu, and frying the frying powder-applied tofu in oil

The basic softening solution may have a pH ranging from pH 7.6 to pH 12.5.

It is recommended that the basic softening solution include at least one selected from the group consisting of but not limited to trisodium citrate, dipotassium phosphate, tripotassium phosphate, sodium hydrogen carbonate, arginine, and lysine.

The soaking may be performed for 24 hours to 48 hours when the basic softening solution has a concentration not less than 0.2wt% and not more than 1wt%, for 3 hours to 24 hours when the basic softening solution has a concentration of more than 1wt% and not more than 5wt%, or for 2 hours to 3 hours when the basic softening solution has a concentration of more than 5wt% and not more than 10wt%.

The soaked tofu may include a solid content ranging from 10wt% to 20wt%.

It is recommended that the frying powder used include at least one selected from the group consisting of tempura powder, wheat powder, rice powder, and starch powder.

The method may further comprise, after the frying, keeping the tofu in a fridge or freezer and then reheating the tofu.

According to an embodiment, there is provided the tofu manufactured to have a texture of sticky starch paste or thick custard cream by the above-described method.

The tofu may be injected with the softening solution and then packed up, or the tofu may be packed in a softening solution-containing container.

According to an embodiment, there is provided a food material including the above-described tofu.

According to embodiments, obtaining such textures that are differentiated from conventional tofu allows more savory tofu to be made.

The tofu may be used in new, various foods or products.

### BRIEF DESCRIPTION OF THE DRAWINGS

A more complete appreciation of the disclosure and many of the attendant aspects thereof will be readily obtained as the same becomes better understood by reference to the following detailed description when considered in connection with the accompanying drawings, wherein:

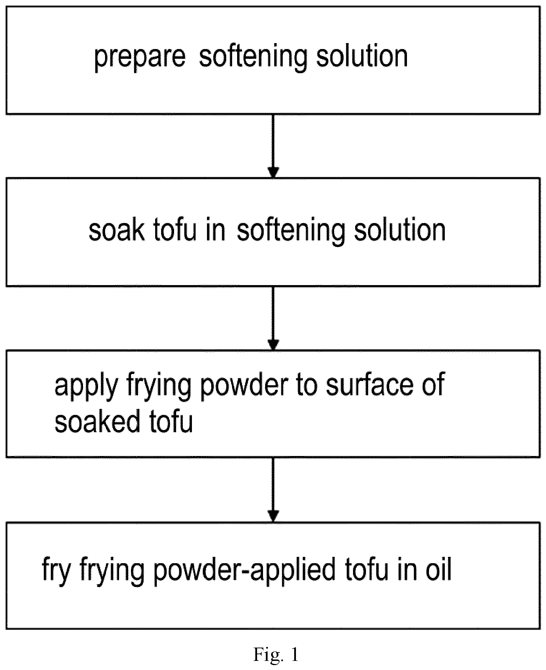

Fig. 1 is a flowchart illustrating a method for manufacturing tofu according to an embodiment;

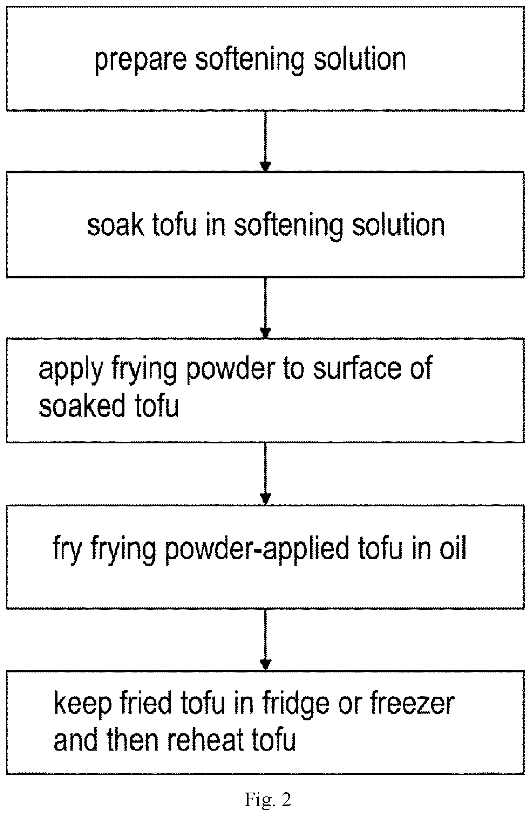

Fig. 2 is a flowchart illustrating a method for manufacturing tofu according to an embodiment;

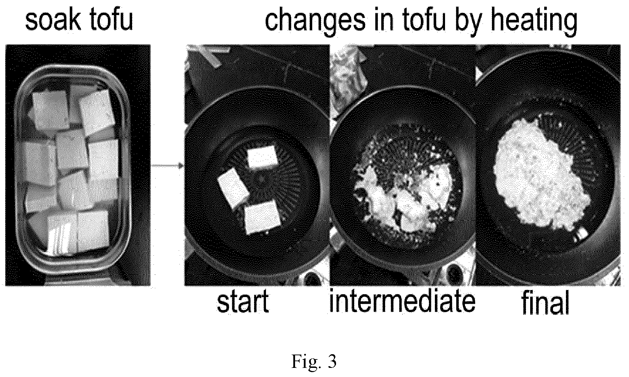

Fig. 3 illustrates photos of tofu when the tofu is soaked in a basic softening solution and then fried with no frying powder applied on the surface, wherein it may be identified that general tofu maintains its shape while properties-modified tofu is softened without remaining solid;

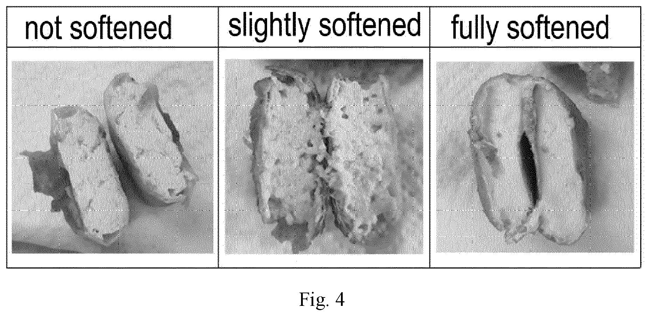

Fig. 4 illustrates photos of tofu showing changes in texture depending on the degree of softening when the tofu is soaked in a softening solution and fried in oil, with frying powder applied to the surface; and

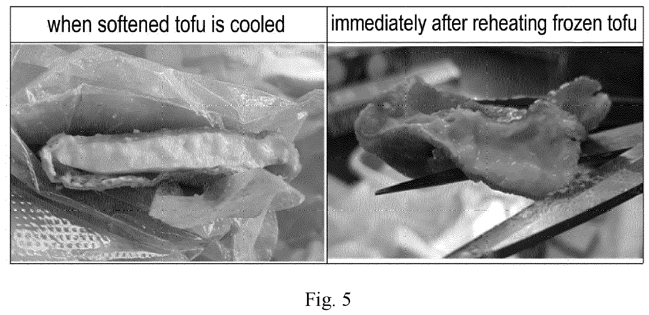

Fig. 5 illustrates photos of normally softened tofu when fried in oil and then cooled (left) and when frozen and then reheated by an air fryer (right).

### DETAILED DESCRIPTION

The terms used herein are defined below.

As used herein, the term "starch paste" refers to a sticky viscous substance obtained by dissolving starch in water and heating it.

Starch does not dissolve in cold water but, in hot water, it dissolves in a gel form and becomes sticky. This is called gelatinization.

If the gelatinized starch solution is left in a cold place for a long time, it returns to a semicrystalline state, which is called retrogradation.

The softened tofu goes through a frying process, and as the tofu is heated, it has a texture similar to that of gelatinized starch paste or thick custard cream, and when cooled, it turns into a texture similar to that of hardened mozzarella cheese like retrograded starch paste.

As used herein, the term 'softening solution' refers to a solution that makes the hard tofu softer and, when the tofu is fried in oil, melts the tofu to have a texture similar to that of sticky starchy starch or thick custard cream.

Hereinafter, embodiments of the disclosure are described in detail.

According to an embodiment, a method for manufacturing tofu includes the steps of:
1) preparing a basic softening solution;
2) soaking tofu in the basic softening solution;
3) applying a frying powder to the surface of the soaked tofu; and
4) frying the frying powder-applied tofu in oil.

In the manufacturing method, the basic softening solution in step 1) is preferably a softening solution of pH7.6 to 12.5 and, even after the tofu is soaked in the softening solution, it needs to remain basic.
The basic softening solution preferably includes at least one selected from the group consisting of trisodium citrate, dipotassium phosphate, tripotassium phosphate, sodium hydrogen carbonate, arginine, and lysine, but is not limited thereto.

In the manufacturing method, step 2) may be performed in any method, but it is preferable to inject the softening solution to implement a dual texture.

The soaking is preferably performed in any one of a) to c) below, but is not limited thereto.
a) When the basic softening solution has a concentration not less than 0.2wt% and not more than 1wt%, soak for 24 hours to 48 hours;
b) When the basic softening solution has a concentration of more than 1wt% and not more than 5wt%, soak for 3 hours to 24 hours;
c) When the basic softening solution has a concentration of more than 5wt% and not more than 10wt%, soak for 2 hours to 3 hours.

In the manufacturing method, the frying powder of step 3) is not limited to a specific powder, and it is preferable to use at least one selected from the group consisting of tempura powder, pancake powder, wheat flour, rice powder, and starch powder.

The frying powder may be applied to the tofu in the form of a powder or a thin dough, and it is preferable to apply it in a powder form in order to maintain or make better the original flavor and taste of the tofu.

In the manufacturing method, it is preferable that the edible or cooking oil used for the frying in step 4) is pure oil that withstands heat and has no taste and odor.

To allow the tofu to be sufficiently heated to have a texture similar to that of sticky starch paste or thick custard cream, it is preferable to perform frying slowly at 120°C to 160°C, rather than doing it quickly within a short time at too a high temperature (e.g., 180°C or higher).

The manufacturing method may further include keeping the tofu in a fridge or freezer and then reheating it.

As a representative reheating method, refrying in oil may be used, but is not limited thereto. For example, a microwave oven, air fryer, or oven may be used.

The reheating is performed to slowly fry in oil the tofu at 120°C to 160°C so that the tofu may be sufficiently heated to have a texture such as of flowable starch paste.

Preferably, the frying or reheating is to be performed without causing cracks in the fried coating.

If the fried coating cracks, the softened tofu therewithin may be lost.

According to an embodiment, there is also provided tofu having a texture such as of starch paste, as manufactured by the above-described method.

The texture of the tofu immediately after frying is similar to that of a sticky starchy paste or thick custard cream and, even after cooling, the tofu remains in the form of hard mozzarella cheese, rather than returning to the original form of tofu.

According to an embodiment, there are also provided food materials including such tofu.

The food materials may be various tofu foods prepared through processing such as cooking, seasoning, drying, freezing, or grinding.

Described below are embodiments and comparative examples.

However, the embodiments and comparative examples are provided merely for illustration purposes, and the scope of the disclosure is not limited thereto.

All raw materials used comply with the standards of the Korean Food Code and Korean Food Additives Code and that were purchased at the mart or online.

<Embodiments 1 to 7 and comparative examples 1 to 12> Manufacture of softening solution depending on the kind of softening material

For the preparation of the softening solution, fruit/vegetable juices containing a lot of proteolytic enzymes or commercially available meat tenderizers were used. Among the additives listed in the Korean food code, products without a separate usage standard were selected and used.

The concentration of the softening solution differs by product, and the concentrations were specified in the embodiments and the comparative examples.

The overall concentration decreases compared to before soaking tofu.

When 200g of tofu is soaked in 500g of 2 wt% solution, the concentration decreases to about 1.4 wt%, and the pH value changes closer to neutral after soaking, whether the liquid is acidic or basic. However, the liquid itself was not changed.

For evaluation of each prepared softening solution, changes in the properties of the tofu 24 hours after soaking 200g of tofu in 500g of each prepared softening solution were evaluated or assessed and, after soaked, the tofu was coated with frying powder and fried and then its texture observation and sensory evaluation were performed.

The results are shown in Table 2 below.

The following evaluation methods were used.

### (Physical) properties

For the measurement of the physical properties, RheoMeter COMPAC-100II commercially available from SUN SCIENTIFIC CO., LTD was used. Tofu samples were prepared by cutting to the cubic shape of 3^{∗}3^{∗}3 cm³, and the strength and hardness test mode was performed using an Adaptor No.25 device.

After soaking in each softening solution, comparison and evaluation were performed on the degree of softening of the tofu.

### Texture

The fried tofu was cut and its inside was observed with the naked eye to evaluate its fluidity and degree of softening.

### Sensory evaluation

After the prepared tofu was ingested by a panel of 10 people, the texture and flavor were compared and sensory evaluation was conducted based on the evaluation table below.

Each point of evaluation is scored as shown in Table 1 below for convenience.

**[Table 1]**

| Score | 5 | 4 | 3 | 2 | 1 |
|---|---|---|---|---|---|
| Physical properties | Highly softened | softened | No change | hardened | Highly hardened |
| Texture | Very excellent | excellent | No change | Poor | Very poor |
| Sensory evaluation | Very excellent | excellent | Normal | poor | Very poor |

**[Table 2]**

| | | Physical properties | texture | Sensory evaluation |
|---|---|---|---|---|
| Embodiment 1 | 2wt% dipotassium phosphate | 5 | 5 | 5 |
| Embodiment 2 | 2wt% sodium hydrogen carbonate | 5 | 5 | 5 |
| Embodiment 3 | 2wt% trisodium citrate | 5 | 4 | 4 |
| Embodiment 4 | 2wt% tripotassium phosphate | 5 | 4 | 2 |
| Embodiment 5 | 2wt% arginine solution | 5 | 4 | 4 |
| Embodiment 6 | 2wt% lysine solution | 5 | 4 | 4 |
| Embodiment 7 | 2wt% mono/tripotassium phosphate mixed solution (basic) | 5 | 4 | 4 |
| Comparative example 1 | 2wt% salt water | 2 | 3 | 3 |
| Comparative example 2 | 2wt% citric acid | 1 | 3 | 1 |
| Comparative example 3 | 2wt% gluconic acid | 2 | 3 | 1 |
| Comparative example 4 | 2wt% monopotassium phosphate | 3 | 3 | 3 |
| Comparative example 5 | 10wt% papain diluent | 3 | 3 | 3 |
| Comparative example 6 | Kiwi juice | 2 | 3 | 3 |
| Comparative example 7 | Pineapple juice | 2 | 3 | 3 |
| Comparative example 8 | Pear juice | 3 | 3 | 3 |
| Comparative example 9 | Radish juice | 3 | 3 | 2 |
| Comparative example 10 | Onion juice | 3 | 3 | 2 |
| Comparative example 11 | Cabbage juice | 3 | 3 | 2 |
| Comparative example 12 | mono/tripotassium phosphate mixed solution (acidic) | 2 | 3 | 2 |

A look at Table 2 reveals that fruit/vegetable juices containing a lot of proteolytic enzymes such as kiwi, pineapple, pear, papaya, radish, and onion had no effect on softening tofu protein.

They are known to break down collagen and soften the meat protein but do not work for tofu with different protein types.

In an acidic solution such as potassium monophosphate (pH4.2 to 4.7), the tofu was hardened and, after fried, its texture was not changed.

Even when soaked in salt water, which is a neutral salt solution, the tofu became hard, and no texture change was not observed after the tofu was fried.

In contrast, in a basic solution, such as trisodium citrate (pH7.6 to 9.0), dipotassium phosphate (pH8.7 to 9.3), tripotassium phosphate (pH11.5 to 12.5), or sodium hydrogen carbonate (pH8.0 to 9.0), as well as in basic amino acids, e.g., arginine (pH10.5 to 12.5) or lysine (pH8.5 to 10.5), the properties of the tofu were weakened or the tofu was softened and, after the tofu was fried, its texture was changed to be similar to that of sticky starch paste or thick custard cream even though there are differences in degree.

When dipotassium phosphate and sodium hydrogen carbonate were used among them, the most excellent results were shown in the evaluation of physical properties and texture, and sensory evaluation.

Even if the mixed solution of mono potassium phosphate, which is acidic, and tripotassium phosphate, which is basic, is basic (e.g., pH10.5 to 11.5), a change was observed in the physical properties and texture of the softened tofu but, when the mixed solution is acidic, no change was found in the physical properties and texture.

Thus, it might be identified that the softening solution is effective in softening tofu when it is basic although the degree of it differs by product.

### <Embodiment 8> Soaking time depending on the concentration of softening solution

The times required for soaking at different concentrations of monopotassium phosphate of embodiment 1 were evaluated.

At this time, the soaking temperature was maintained at 0 to 15°C due to the nature of the tofu that is susceptible to deterioration.

As the method for evaluating the experimental results, the texture and sensory evaluation were conducted after the final frying treatment on the tofu.

The results are shown in Table 3 below.

**[Table 3]**

| | 0.2wt% | | 1 wt% | | 2wt% | | 5wt% | | 10wt% | |
|---|---|---|---|---|---|---|---|---|---|---|
| | texture | Sensory evaluation | texture | Sensory evaluation | texture | Sensory evaluation | texture | Sensory evaluation | texture | Sensory evaluation |
| Immediately | 3 | 3 | 3 | 3 | 3 | 3 | 3 | 3 | 3 | 3 |
| 1h | 3 | 3 | 3 | 3 | 3 | 3 | 3 | 3 | 3 | 3 |
| 2h | 3 | 3 | 3 | 3 | 3 | 3 | 3 | 3 | 4 | 3 |
| 3h | 3 | 3 | 3 | 3 | 5 | 5 | 5 | 5 | 5 | 4 |
| 24h | 3 | 3 | 4 | 4 | 5 | 5 | 5 | 4 | 5 | 3 |

The time required for soaking varies depending on the concentration of the softening solution. At a concentration of 1% or less, a soaking time of 24 hours or more is required, and at a concentration of 10% or more, the soaking time may be shortened a little more. However, for complete softening, it may be identified that a soaking time of 3 hours or more is most preferable at a concentration of 2wt% or more.

In the sensory evaluation, soaking for 3 hours or more at a concentration of 2 wt% presented a good evaluation score but, at 5 wt% or more, the evaluation score decreased as the soaking time increased.

This is because the high concentration of the softening solution affects the taste of the tofu. Therefore, for mass production, it is preferable to select an appropriate concentration of the softening solution in consideration of commerciality and properties.

### <Embodiment 9> Changes by different soaking temperatures

The changes over time at different concentrations of monopotassium phosphate of embodiment 1 were identified or evaluated.

In this case, the concentration of the softening solution for the experiment was 2 wt%, and the same evaluation method as that described above was performed.

**[Table 4]**

| | 15°C | | 30°C | | 50°C | | 80°C | | 100°C | |
|---|---|---|---|---|---|---|---|---|---|---|
| | texture | Sensory evaluation | texture | Sensory evaluation | texture | Sensory evaluation | texture | Sensory evaluation | texture | Sensory evaluation |
| 5 min | 3 | 3 | 3 | 3 | 3 | 3 | 4 | 4 | 5 | 5 |
| 0.5 h | 3 | 3 | 4 | 3 | 4 | 4 | 5 | 5 | 5 | 5 |
| 1h | 4 | 3 | 4 | 4 | 5 | 5 | 5 | 5 | 5 | 4 |
| 2h | 4 | 4 | 5 | 5 | 5 | 5 | 5 | 4 | 5 | 3 |
| 3h | 5 | 5 | 5 | 5 | 5 | 4 | 5 | 3 | 5 | 3 |

The time required for soaking is varied depending on the soaking temperature. It might be identified that the higher the temperature, the shorter the soaking time, and the lower the temperature, the longer the soaking time.

However the immersion temperature is preferably not more than 15 °C or not less than 80 °C, because tofu is easily deteriorated at 30 °C or 50 °C

For mass production, it is preferable to select an appropriate soaking temperature and soaking time considering the work time and deterioration.

From the results that the soaking time reduces as the concentration or temperature increases as identified in embodiments 8 and 9, it may be identified that other various common factors influencing the reaction speed of chemical reactions may work.

Thus, it may be expected or identified that the soaking time may be varied by changing other factors (e.g., stirring the softening solution or adjusting the pressure) than concentration and temperature.

### <Embodiment 10> Changes by different soaking methods

The soaking method described above is the most common soaking method that allows the tofu to be immersed in the softening solution overall evenly and uniformly.

This method leads to an even or uniform softening of the tofu from the surface to the inside as time passes. Thus, changes in texture after frying occur evenly or uniformly.

Changes over time in the portion where the softening solution was injected and the rest where the softening solution was not injected in the tofu, for allowing the tofu more various textures, were compared and observed.

For example, after injecting the softening solution to the deep inside of the tofu, it was observed both whether the inside of the tofu softens while the surface remains the original texture of tofu-i.e., whether the tofu has a dual texture structure, and whether the softening solution evenly spread from the inside to the surface so that the overall tofu was uniformly softened as time passed.

In the experiment, 5g of 10 wt% dipotassium phosphate solution was injected into about 27g of tofu cubes each measuring 3 cm in each of width, length, and height, and changes in texture were observed at different times.

The reason why the high-concentration of softening solution of 10 wt% was used is to minimize the injection amount and to allow the entire concentration after injection to be similar to 1.4 wt% of embodiment 1. In the experiment, the total concentration including the tofu was about 1.5 wt%.

The results are shown in Table 5 below.

**[Table 5]**

| | |
|---|---|
| Time after injection | Changes after softening solution is injected |
| Immediately | No change |
| 1h | Slightly softened in center but no significant change |
| 2h | Slightly softened in center. After fried, texture such as of starch paste is found only in center. Softened portion and unsoftened portion exhibit dual texture pattern, where unsoftened portion is larger than softened portion |
| 3h | Surroundings of center are also softened, and the texture of starch paste expands. Dual texture pattern is found, where unsoftened portion is larger than softened portion |
| 4h | Overall softened. The texture of starch paste found uniformly from the center to surface |

It may be identified from Table 5 that the (physical properties of) tofu may be softened by injecting a softening solution and, as time passes by, the overall tofu may be rendered to have a texture such as that of starch paste or only a specific portion of the tofu has a texture of starch paste while the rest remains with the original physical properties of tofu so as to implement a dual texture pattern or structure.

By this method, the tofu softening occurs in the opposite direction of that of the conventional or common soaking method. That is, according to an embodiment, tofu is softened from the inside, where the softening solution has been injected, to the outside.

To implement a dual texture pattern, frying may be needed to be performed within a specific time after the softening solution is injected.

### <Embodiment 11> Changes in softening state depending on solid content of tofu

An experiment was conducted to identify the influence by the solid content of tofu on softening.

As experimental conditions, 2% dipotassium phosphate of embodiment 1 was used as the softening solution, and 200g of tofu was immersed in 500g of the softening solution for 24 hours, and then, evaluation of the changed physical properties of the tofu and, after final frying, texture and sensory evaluation were conducted.

As the tofu used in the experiment, tofu with solid content data was purchased at the mart, and for hard tofu, tofu prepared according to Applicant's Korean Patent No. 10-1987905 was used.

The results are shown in Table 6 below.

**[Table 6]**

| | Physical properties | texture | Sensory evaluation |
|---|---|---|---|
| Soft tofu (about 8% solid content) | 5 | 3 | 2 |
| Hard tofu with about 12% solid content (e.g., tofu for stew) | 5 | 5 | 5 |
| Hard tofu with about 14% solid content (e.g., tofu for frying) | 5 | 5 | 5 |
| Hard tofu with about 18% solid content (e.g., Chodang tofu produced from Chodang village in South Korea) | 4 | 5 | 5 |
| Hard tofu with about 22% solid content | 3 | 3 | 3 |

It might be identified from Table 6 above that common firm tofu, e.g., cotton tofu, overall presented superior evaluation results under the experimental conditions.

In contrast, soft tofu with a low solid content were softened substantially after soaking in the softening solution, but did not exhibit good evaluation results in terms of texture and sensory evaluation.

The hard tofu with a high solid content, after soaked in the softening solution, made no or little changes in physical properties and texture.

This reveals that there is a correlation between the concentration of the softening solution and the solid content. Tofus prepared by filling cold soy milk without crushing and compressing, such as soft tofu, may not be suitable, but tofu may be rendered to have a desired physical property or texture if soaked at an appropriate concentration depending on the solid content.

### <Embodiment 12> Manufacture and evaluation of tofu by different methods for coating with frying powder

'Frying' or 'frying in oil' as used herein may refer to cooking in edible oil, and 'reheating' as used herein may include heating by the same method as frying or heating using an air fryer, oven or microwave oven.

Frying is an essential process to allow the tofu to have a texture similar to that of sticky starch paste or thick custard cream.

The tofu is able to gain a texture such as of flowable starch paste by heating the softened tofu to a specific temperature or more during the frying process.

However, it is important to properly control the temperature and time of frying the tofu, because of the weak physical properties and high moisture content of tofu. Thus, it is preferable to slowly fry tofu at 120 °C to 160 °C so that the tofu is appropriately heated up, rather than frying at too high a temperature, e.g., 180 °C or more, from the beginning for a short time. Thus, the tofu is able to gain a similar texture to sticky starch paste with flowability.

It is preferable to use any pure edible frying oil, which has good resistance to heat and no distinct flavor and odor.

However, butter and margarine may be inappropriate as the frying oil as they can decompose when temperature reaches about 100°C.

Unlike other common tofu which maintains their original shape when fried, the tofu according to an embodiment may lose its shape and be rendered to have a flowable property if fried. Thus, the fotu of the embodiment is coated with frying powder (e.g., tempura powder) to keep it in shape if fried .

Frying powder (or tempura powder) is not limited to a specific powder, and any powder with fine particles such as pancake powder, flour, rice powder, starch powder, etc. may be used.

For such application, the tofu may be dipped in the frying powder itself or a batter of water and the frying powder, and whichever method is used, the resultant texture inside is the same.

However, the texture, taste, flavor, and preference may be affected by the application method. Table 7 below shows the results of texture, preference, and sensory evaluation when the tofu is dipped in the frying power itself or a batter of the frying powder and water.

**[Table 7]**

| | texture | Sensory evaluation | Preference |
|---|---|---|---|
| Dip in powder | 5 | 5 | 5 |
| Dip in batter | 4 | 3 | 3 |

The influence on the text by the application method is related to, e.g., frying temperature and time because dipping in batter may take a relatively longer time and higher temperature than dipping in powder.

Dipping in powder produces better sensory and preference evaluation results because of leading to a thinner fried coating than dipping in batter, allowing the original flavor or taste of tofu to be more clearly tasted while also preventing the tofu food from being too greasy or oily due to thick coats.

## Claims

1. A method for manufacturing tofu, the method comprising: preparing a basic softening solution;
soaking tofu in the basic softening solution;
applying a frying powder to the surface of the soaked tofu; and
frying the frying powder-applied tofu in oil.

2. The method of claim 1, wherein the basic softening solution has a pH ranging from 7.6 to pH 12.5.

3. The method of claim 1, wherein the basic softening solution includes at least one selected from the group consisting of trisodium citrate, dipotassium phosphate, tripotassium phosphate
, sodium hydrogen carbonate, arginine, and lysine.

4. The method of claim 1, wherein the soaking is performed:
for 24 hours to 48 hours when the basic softening solution has a concentration not less than 0.2wt% and not more than 1wt%;
for 3 hours to 24 hours when the basic softening solution has a concentration of more than 1wt% and not more than 5wt%; or
for 2 hours to 3 hours when the basic softening solution has a concentration of more than 5wt% and not more than 10wt%.

5. The method of claim 1, wherein the soaked tofu includes a solid content ranging from 10wt% to 20wt%.

6. The method of claim 1, wherein the frying powder includes at least one selected from the group consisting of tempura powder, wheat powder, rice powder, and starch powder.

7. The method of claim 1, further comprising, after the frying, keeping the tofu in a fridge or freezer and then reheating the tofu.

8. A tofu manufactured to have a texture of sticky starch paste or thick custard cream by the method of claim 1.

9. The tofu of claim 8, wherein the tofu is injected with or contained in the softening solution and packed up.

10. A food material including the tofu of claim 8.
